Europäisches Patentamt

European Patent Office

Office européen des brevets

(19)

(11) Veröffentlichungsnummer: **0 001 288**
**B1**

(12) **EUROPÄISCHE PATENTSCHRIFT**

(45) Veröffentlichungstag der Patentschrift: **28.07.82**

(21) Anmeldenummer: **78100961.8**

(22) Anmeldetag: **22.09.78**

(51) Int. Cl.³: **G 07 C 5/00,** G 01 D 1/14, G 01 D 9/32

(54) **Registrieranordnung für Fahrtschreiber.**

(30) Priorität: **23.09.77 CA 287369**

(43) Veröffentlichungstag der Anmeldung:
**04.04.79 Patentblatt 79/7**

(45) Bekanntmachung des Hinweises auf die Patenterteilung:
**28.07.82 Patentblatt 82/30**

(84) Benannte Vertragsstaaten:
**DE FR GB SE**

(56) Entgegenhaltungen:
**DE - A - 1 623 761**
**DE - A - 2 008 403**
**DE - A - 2 322 299**
**DE - A - 2 351 789**
**DE - A - 2 605 725**
**DE - A - 2 645 869**
**DE - C - 1 801 691**
**FR - A - 2 152 612**
**FR - A - 2 334 090**
**US - A - 3 422 440**
**US - A - 3 838 445**
**US - A - 3 864 731.**

(73) Patentinhaber: **Kienzle Apparate GmbH**
**Heinrich-Hertz-Strasse Postfach 1650**
**D-7730 Villingen-Schwenningen (DE)**

(72) Erfinder: **Ruhl, Herman**
**30 Queen Elizabeth Boulevard**
**Toronto Ontario M8Z 2T6 (CA)**

(74) Vertreter: **Passarge, Karin**
**c/o Kienzle Apparate GmbH Heinrich-Hertz-Strasse Postfach 1650**
**D-7730 Villingen-Schwenningen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Registrieranordnung für Fahrtschreiber

Die Erfindung betrifft eine Registrieranordnung für Fahrtschreiber gemäß dem Oberbegriff des Anspruchs 1, welche dem Aufzeichnen von Markierungen zur Kennzeichnung kritischer und/oder überkritischer Zustände beim Betrieb eines Kraftfahrzeuges dient.

Um solchen Zuständen entsprechende Betriebsdaten zu erhalten, werden die interessierenden Betriebsfunktionen — im allgemeinen sind dies für den Betrieb des Kraftfahrzeuges entscheidende Betriebsfunktionen — durch geeignete Grenzwertgeber überwacht. Diese Geber können bei geeigneter Signalanpassung unmittelbar mit jeweils einem Aufzeichnungsorgan verbunden sein oder unter Verwendung einer Abfrageeinrichtung auch auf ein einziges Aufzeichnungsorgan einwirken.

Es besteht an sich kein Zweifel darüber, daß zufriedenstellende Aussagen über einen ordnungsgemäßen oder mangelhaften Betrieb eines Kraftfahrzeuges, insbesondere eines gewerblich genutzten Kraftfahrzeuges und über die Zweckmäßigkeit des Einsatzes eines solchen Kraftfahrzeuges nur dann gegeben werden können, wenn außer den bisher bereits durch Fahrtschreiber erfaßten Betriebsdaten, nämlich den gefahrenen Geschwindigkeiten, den zurückgelegten Strecken, den Drehzahlen des Motors und den Arbeitszeiten der Fahrer auch andere Betriebsdaten erfaßt werden. So ist es, um die wirtschaftliche Nutzung eines Fahrzeuges oder partielle Überbelastungen beurteilen, um Wartungszeitpunkte mit gezielten Wartungsmaßnahmen festlegen oder im Sinne eines kostenbewußten Fahrverhaltens erzieherisch auf die Fahrer einwirken zu können, notwendig, außer reinen Maschinendaten, wie Öldruck, Betriebstemperatur, Kühlung und dergl., auch beispielsweise Reifendruck, Ladegewicht, Kraftstoffverbrauch und ähnliche Betriebsdaten, zu erfassen. Ein wesentlicher Gesichtspunkt hinsichtlich der angestrebten Beurteilung ist dabei die Wahrung der gegenseitigen Beziehungen sämtlicher Betriebsdaten, also auch der bisher von Fahrtschreibern erfaßten Daten, was bedeutet, daß das Erfassen auf ein und demselben Aufzeichnungsträger erfolgen sollte.

Um diese Bedingung zu verwirklichen, ist es aber aufgrund des relativ schmalen Registrierbereichs, der auf dem Aufzeichnungsträger eines Fahrtschreibers selbst dann noch gegeben ist, wenn als Aufzeichnungsträger Diagrammscheiben Anwendung finden, auf denen beidseitig Aufzeichnungen erfolgen können, zwingend erforderlich, die aufzuzeichnenden Daten dahingehend zu prüfen, ob eine analoge Aufzeichnung, die bekanntlich sehr viel Aufzeichnungsfläche beansprucht, notwendig ist, oder ob bereits das Aufzeichnen geeigneter Markierungen beim Erreichen oder Überschreiten bestimmter Grenzwerte eine ausreichende Aussage darstellt.

So wird nach wie vor das Aufzeichnen der gefahrenen Geschwindigkeiten wegen der Beurteilung von Unfallsituationen und des wirtschaftlichen Fahrverhaltens in einer lückenlosen analogen Form vorgenommen werden müssen. Anders verhält es sich bei Zählwerten, beispielsweise zurückgelegten Strecken oder verbrauchten oder noch zur Verfügung stehenden Kraftstoffmengen und Ähnlichem. Bei solchen Daten ist im wesentlichen die Häufigkeit der Zählwerte von Interesse, so daß eine Aufzeichnungsweise gewählt werden kann, die in Form geeigneter Markierungen, auch wenn diese stetig erfolgen, weniger Aufzeichnungsfläche beansprucht als die bisher übliche Form eines Zick-Zack-Diagramms. Für die Mehrzahl der übrigen Betriebsfunktionen gilt jedoch, daß die Aussage irgendwelcher Meßwerte einerseits weitgehend bedeutungslos ist, solange diese Meßwerte nicht Grenzwerte darstellen, sondern eine normale bzw. eine zufriedenstellende Funktion wiedergeben, andererseits auf gar keinen Fall übersehen werden darf, wenn bei diesen Betriebsfunktionen kritische oder überkritische Meßwerte auftreten oder sich häufen. Das bedeutet, daß den Aufzeichnungen der diesen Zuständen entsprechenden Betriebsdaten im wesentlichen eine Warnfunktion, im Grenzfalle ein Abschalt- bzw. Stillsetzungsbefehl zukommt.

Somit ist in diesen Fällen ein fortlaufendes Aufzeichnen sämtlicher Betriebsdaten, ganz gleich ob in analoger oder digitaler Weise, nicht nur nicht notwendig, sondern auch unzweckmäßig, weil abgesehen vom Registrierflächenbedarf und damit einer Beschränkung der Anzahl der erfaßbaren Daten, die Übersichtlichkeit hinsichtlich der angestrebten Überwachung kritischer Betriebszustände mangelhaft ist und von einem Warneffekt erst recht nicht die Rede sein kann.

Diesen Problemkreis berührt beispielsweise die DE—PS Nr. 11 50 233, deren Gegenstand eine Registrieranordnung betrifft, welche beim Überschreiten der zulässigen Motordrehzahl eines Kraftfahrzeuges ein erstes Diagramm liefert, indem ein Registrierorgan für die Dauer der Überschreitung aus einer Grundstellung in eine andere Stellung verschwenkt wird. Ferner ermöglicht diese Registrieranordnung ein das erste Diagramm überlagerndes zweites Diagramm mit einer Aussage über die Anzahl der Motorumdrehungen in der Überdrehzahlsituation. In diesem Falle wird das Registrierorgan in einem vorbestimmten Takt nach beispielsweise jeweils 10 oder 100 über der Grenzdrehzahl liegenden Umdrehungen aus seiner die Überdrehzahl repräsentierenden Stellung ausgelenkt, und es entsteht, da der zeitliche Abstand von jeweils 100 Umdrehungen sehr gering ist, ein mehr oder weniger dichtes Strichdiagramm.

Abgesehen davon, daß beim Gegenstand dieses Patentes mit einem Registrierorgan lediglich zwei Daten aufgezeichnet werden, das gewählte Registrierprinzip andererseits aber auch das Aufzeichnen einer Vielzahl von Betriebsdaten aus baulichen Gründen gar nicht zuläßt, wird bei dieser Registrieranordnung, dadurch daß sich das Registrierorgan ständig in dem ihm zugeordneten schmalen Registrierbereich befindet und unmittelbar mit dem Aufzeichnungsträger in Verbindung steht, auch bei normaler Betriebsfunktion des Fahrzeugmotors eine mehr oder weniger nichtssagende Grundlinie aufgezeichnet, also unnötig Aufzeichnungsfläche beansprucht.

Außerdem sind derartige, zeitgenaue Stufendiagramme für den angestrebten Zweck deshalb unbrauchbar, weil sie bei entsprechender Folge wenig übersichtlich und maschinell kaum auswertbar sind und keinerlei Warneffekt ausüben. Hinzu kommt, daß im praktischen Fahrbetrieb vielmehr kurzzeitige Drehzahlsprünge auftreten als länger dauernde Drehzahlüberschreitungen und somit anstatt Stufendiagrammen lediglich Striche quer zur Transportrichtung des Aufzeichnungsträgers aufgezeichnet werden. Die entscheidende Aussage, nämlich daß ein unzulässiger Zustand gegeben war, wird somit durch diese Art der Aufzeichnung nicht deutlich genug markiert.

Ferner ist in der DE—PS 18 01 691 eine Registrieranordnung für das Aufzeichnen von Arbeitszeiten und Stückzahlen beschrieben worden, welche ein stetig über dem zeitabhängig angetriebenen Aufzeichnungsträger hin und her bewegtes und zum Aufzeichnen auf den Aufzeichnungsträger absenkbares Registrierorgan aufweist. Diese Registrieranordnung umfaßt eine nach Art eines Drehschalters ausgebildete Abfrageeinrichtung, deren Schleifer synchron mit dem Registrierorgan umläuft und dabei mehrer Gever, denen auf dem Aufzeichnungsträger bestimmte Registrierspuren zugeordnet sind, abtastet. Dabei sind wenigstens für eine aufzuzeichnende Größe, nämlich die Stückzahlen bzw. für die die Stückzahlen repräsentierenden Stückimpulse, Speichermittel vorgesehen, um die beliebig ankommenden Stückimpulse jeweils dann aufzeichnen zu können, wenn das Registrierorgan der betreffenden Registrierspur gegenübersteht.

Diese Registriermethode liefert zwar gut auswertbare Diagramme und wäre geeignet, Markierungen für verschiedene Grenzwerte aufzuzeichnen, sie ist andererseits aber mit den bereits geschilderten Nachteilen insbesondere hinsichtlich des Registrierflächenbedarfs behaftet und nicht in der Lage, Markierungen für Grenzwerte derart aufzuzeichnen, daß sie einen Warneffekt ausüben.

Eine andere mit dem DE—GM 17 57 366 bekannt gewordene Registrieranordnung zeigt für das Aufzeichnen von zurückgelegten Strecken und verbrauchtem Kraftstoff ebenfalls eine Doppelfunktion eines einzigen Registrierorgans und die unmittelbare Zuordnung zweier in enger Beziehung zueinander stehender Betreibsdaten in einer einzigen Registrierspur. Es handelt sich dabei um das Aufzeichnen eines Streckendiagramms in der üblichen Form eines Zick-Zack-Diagramms und diesem Diagramm überlagerten Markierungen, die die verbrauchten Kraftstoffmengen in quantisierter Form wiedergeben, ohne daß hierfür getrennte Registrierspuren, also zusätzliche Aufzeichnungsfläche und Raumbedarf für getrennte Registrierorgane erforderlich wäre.

Die Auswertung dieser Aufzeichnungskombination ist jedoch sehr problematisch und maschinell nicht möglich. Es fehtl ihr, obwohl sie hinsichtlich der Registrierflächennutzung Vorteile bietet, an der für eine visuelle Auswertung notwendigen Übersichtlichkeit, ganz abgesehen davon, daß diese statistische Erfassung von Mengen keine Grenzwertaussage, beispielsweise über den verbleibenden Aktionsradius des Fahrzeuges oder zumindest den noch verfügbaren Kraftstoffvorrat, bietet.

Somit lag der vorliegenden Erfindung die Aufgabe zugrunde, eine Registrieranordnung für Fahrtschreiber zu schaffen, welche durch Abtasten geeigneter Geber in zeit- oder streckenabhängigen Intervallen für Grenzwerte und/oder Grenzwertüberschreitungen einer Vielzahl von Betriebsdaten eines Kraftfahrzeuges deutlich sichtbare und maschinell mit hoher Sicherheit auswertbare Markierungen aufzeichnet.

Die Lösung dieser Aufgabe sieht vor, daß der Abfrageeinrichtung ein Zeitgeber zugeordnet ist, welcher beim Auffinden eines Signals des Grenzwertgebers den Abfragevorgang für eine wählbare Dauer unterbricht und daß Mittel vorgesehen sind, die wenigstens für die Dauer des Abfragestillstandes eine oszillierende Bewegung des in der betreffenden Registrierspur befindlichen Registrierorgans bewirken.

Ein bevorzugtes Ausführungsbeispiel ist dadurch gekennzeichnet, daß für das Aufzeichnen der Grenzwerte und/oder Grenzwertüberschreitungen kennzeichnenden Markierungen ein in einem Fahrtschreiber für die Drehzahlregistrierung vorgesehenes an sich bekanntes Nachlaufregistriersystem mitbenutzt wird, wobei mittels zeit- oder streckenabhängig wirksamer Schaltmittel die Drehzahlaufzeichnungen für die Dauer des Abfragens der Grenzwertgeber und gegebenenfalls des Aufzeichnens von Markierungen unterbrechbar sind.

Die Vorteile, die die Erfindung beitet, sind zunächst darin begründet, daß das Vorurteil, die Mehrzahl der interessierenden Betriebsfunktionen eines Kraftfahrzeuges lückenlos aufzeichnen zu müssen, aufgegeben wurde und erkannt wurde, daß das Aufzeichnen einer Betriebsfunktion in den meisten Fällen auf eine oder wenige wesentliche Daten, beispielsweise einen Grenzwert und/oder einen überkritischen Funktionswert beschränkt werden kann, wobei dann geeignete Markierungen für diese Daten aufgezeichnet werden müssen.

Mit dieser Darstellung, bei der im allgemeinen Markierungen lediglich für einen bestimmten Funktionswert einer Fahrzeugfunktion aufgezeichnet werden, ist zunächst eine maximale Nutzung der Registrierfläche und eine erhebliche Steigerung der Informationsdichte möglich. Darüber hinaus bieten die als Balkendiagramme aufgezeichneten Markierungen den entscheidenden Vorteil einer besonders guten Übersichtlichkeit, die sich selbstverständlich auch bei der maschinellen Auswertung des Aufzeichnungsträgers durch erhöhte Lesesicherheit bei verringertem Aufwand seitens der Leseeinrichtung positiv auswirkt. Außerdem wird durch den deutlichen Warneffekt, den diese Markierungen auch bei flüchtiger Beobachtung des Aufzeichnungsträgers bewirken, die Betriebssicherheit des Fahrzeuges insofern verbessert, als Entscheidungen über Änderungen im Fahrverhalten, Wartungsarbeiten oder andere, möglicherweise umgehend vorzunehmende Maßnahmen wesentlich erleichtert werden.

Aus diesen Gründen ist es auch angezeigt, einen für diese Registrieraufgabe neu zu entwickelnden Fahrtschreiber als Sichtgerät auszubilden, um eine unmittelbare Beobachtung des Aufzeichnungsträgers von außen zu ermöglichen. Andererseits läßt sich jedoch jeder Fahrtschreiber, der mit einem Nachlaufmeß- und -registriersystem ausgerüstet ist, für das Aufzeichnen der vorgeschlagenen Markierungen umrüsten, ohne daß hierfür irgendwelchr Fertigungsaufwand hinsichtlich der Registriermittel erforderlich wäre.

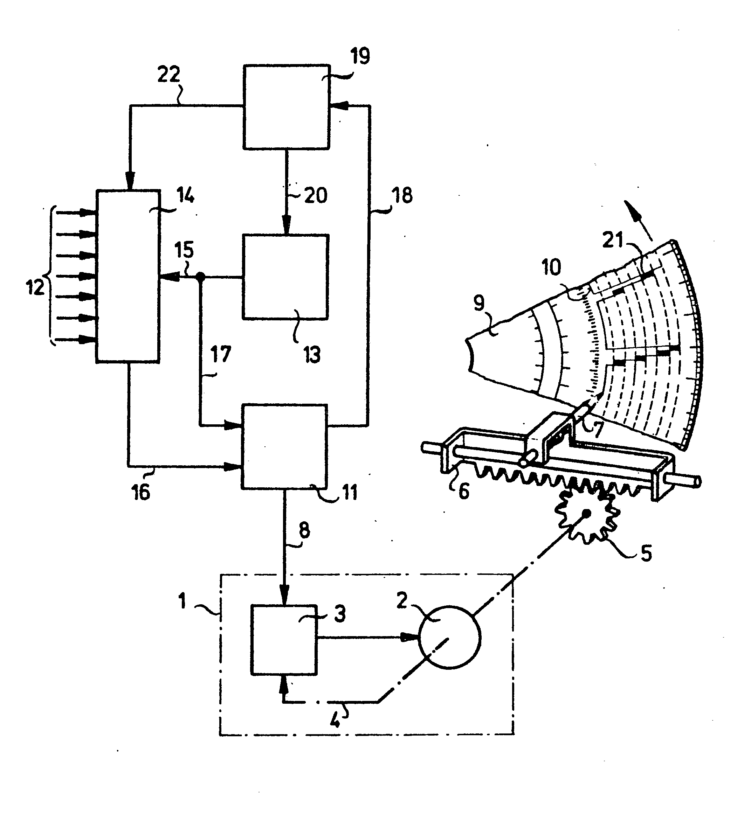

Im folgenden wird ein bevorzugtes Ausführungsbeispiel der Erfindung anhand der beigefügten Zeichnung näher erläutert:

Da vorausgesetzt werden kann, daß Fahrtschreiber hinlänglich bekannt sind, auch solche, die für das Meseen und Registrieren sowohl der Geschwindigkeiten eines Fahrzeuges als auch der Motordrehzahlen mit jeweils einem Nachlaufmeß- und -registriersystem ausgerüstet sind, beispielsweise einem solchen gemäß der DE—PS 20 08 403, ist die Zeichnung der Einfachheit halber auf das dargestellte Blockschaltbild beschränkt.

Mit "1" ist ein Nachlaufsystem bezeichnet, das bekanntlich als wesentliche Baugruppen einen Stellmotor 2, eine Steuereinheit 3 und Rückführelement 4 umfaßt. Der Stellmotor 2 ist über ein Zahnrad 5 getrieblich mit einem Schlitten 6 vergunden, der einen gefedert gelagerten Schreibstift 7 trägt. Dieser zeichnet, wenn auf der Eingangsleitung 8 des Nachlaufsystems 1 kein Steuersignal steht, auf der als Aufzeichnungsträger dienenden und in bekannter Weise uhrzeitrichtig angetriebenen Diagrammscheibe, von der lediglich ein Ausschnitt 9 dargestellt ist, eine Grundlinie 10 auf. Von dieser Grundlinie 10 ausgehend wird der Schreibstift zu Beginn des Abfragevorganges geradlinig oder bei zentraler Lagerung des Registrierorgans auch bogenförmig radial verschwenkt und im weiteren Verlauf des Abfragevorganges schrittweise entsprechend den mittleren Abständen der auf der Diagrammscheibe vorgesehenen und den einzelnen, nicht dargestellten Grenzwertgebern zugeordneten Registrierspuren zurückgesetzt.

Das bedeutet, daß mittels eines mit "11" bezeichneten Steuersignalgebers, der im einfachsten Talle ein Spannungsteiler darstellen kann, auf der Eingangsleitung 8 den einzelnen Registrierspuren entsprechende bzw. die jeweiligen Grenzwertgeber kennzeichnende Spannungspotentiale bereitgestellt werden müssen.

Selbstverständlich kann das Aufzeichnen auch derart organisiert sein, daß das Registrierorgan erst dann ausgelenkt wird, wenn auf einem der Kanäle 12, die von den Grenzwertgebern ausgehen, ein Signal ansteht oder angestanden hat und in geeigneter Weise bis zum nächstfolgenden Abfragezyklus gespeichert wurde. Allerdings ist dann, wenn kein Signal gespeichert war, durch die fehlende radiale Registrierlinie kein Nachweis dafür gegeben, daß der Abfrage- und Registriervorgang ordnungsgemäß erfolgt ist. Kann andererseits auf diese Bedingung verzichtet werden, so ist es zur Vermeidung jeglicher radialer Anstriche zu den einzelnen Registrierspuren denkbar, den Schreibstift mittels elektromagnetischer Mittel derart zu steuern, daß er erst dann auf die Diagrammscheibe aufgesetzt wird, wenn er die Registrierposition erreicht hat, die dem anstehenden Steuersignal entspricht.

Beim Abfragevorgang, der stetig erfolgen kann, zweckmäßigerweise aber als eine Art Testprogramm in zeit- oder wegabhängigen Intervallen, beispielsweise pro 100 km zurückgelegter Strecke erfolgt, tastet eine beispielsweise als Drehschalter ausgebildete Abfrageeinrichtung 13, die einzelnen Grenzwertgeber bzw. die den Grenzwertgebern zugeordneten Speicherstellen in einer Speichereinrichtung 14, die ihrerseits aus elektromagnetischen oder elektronischen Speichermitteln gebildet sein kann, über die Leitung 15 nacheinander ab. Nebenbei sei erwähnt, daß gewisse Gebersignale über längere Zeit anstehen können, andere dagegen kurzzeitig, beispielsweise bei Drehzahlspitzen, auftreten, so daß eine Zwischenspeicherung letzten Endes nur für einen Teil der interessierenden Betriebsdaten zwingend erforderlich ist.

Trifft nun bei der Abfrage die Abfrageeinrichtung 13 auf einen belegten Speicherplatz, dessen Belegung durch das Signal eines Grenzwertgebers auf einem der Kanäle 12 erfolgt ist, wird durch den Steuersignalgeber 11, welcher einerseits über eine Leitung 16 mit der Speichereinrichtung 14, andererseits über eine Leitung 17 mit der Abfrageeinrichtung 13 verknüpft ist, ein diesem Speicherplatz entsprechendes bzw. diesen Speicherplatz kennzeichnendes Spannungspotential über die Eingangsleitung 8 an die Steuereinheit 3 des Nachlaufsystems 1 gelegt. Gleichzeitig wird über die Leitung 18 ein Zeitgeber 19 angesteuert, wobei dessen Zeitsignal, das zum Einstellen der Länge der aufzuzeichnenden Balkendiagramme in geeigneter Weise veränderbar ist, über eine Leitung 20 die Abfrageeinrichtung 13 für eine wählbare Dauer stillsetzt. Wird in der Zeit des Abfragestillstandes das vom Steuersignalgeber 11 gelieferte Steuersignal in geeigneter Weise durch ein Wechselspannungssignal moduliert, so werden vom Schreibstift 7 in den entsprechenden Registrierspuren Balkendiagramme aufgezeichnet. Diese Balkendiagramme — eines davon ist auf dem dargestellten Diagrammscheibenausschnitt 9 mit "21" bezeichnet — stellen die gewünschten Markierungen für die von den Grenzwertgebern gemeldeten Betriebsdaten dar.

Nach Ablauf des durch den Zeitgeber 19 bestimmten Abfragestops wird der registrierte Speicherinhalt durch die Rückflanke des Zeitsignals über die Leitung 22 gelöscht und über die Leitung 20 der Abfragevorgang, der bis zum Auffinden eines weiteren belegten Speicherplatzes in der Speichereinrichtung 14 oder bis zum Ende des Abfragezyklus fortegesetzt wird, erneut gestartet.

Der Vollständigkeit halber sei erwähnt, daß das Registrieren der von Grenzwertgebern gelieferten Betriebsdaten in vorteilhafter Weise in mit ein und demselben Nachlaufsystem durchgeführte Analogregistrierungen, beispielsweise der Drehzahlaufzeichnung oder einer Aufzeichnungskombination von Drehzahlverlauf und Motortemperatur, bei denen es weniger auf das Erfassen von Momentanwerten, sondern vielmehr auf den Nachweis von Tendenzen ankommt, und die Grenzwerte dieser Betriebsfunktionen und deren Überschreitungen ohnehin getrennt erfaßt werden, eingeblendet werden können.

Mit dem gleichen Nachlaufsystem und den gleichen Markierungsmitteln sind beispielsweise aber auch Zählwerte parallel zu den Betriebsdatenmarkierungen in quantisierter Form registrierbar, vorausgesetzt, daß der kleinstmögliche zeitliche Abstand zwischen zwei Zählmarken den für die Betriebsdatenmarkierung maximal benötigten Zeitbereich nicht unterschreitet. Denkbar ist in diesem Zusammenhang das Aufzeichnen von Streckenmarkierungen, wobei eine Synchronisation zwischen den Streckenmarkierungen und der Betriebsdatenregistrierung und das Vermeiden von Überschneidungen dadurch erzielt werden kann, daß die Grenzwertgeber streckenabhängig abgefragt und die Anforderungen an die Auflösbarkeit des Streckendiagramms entsprechend angepaßt werden. Dadurch läßt sich der Aufwand hinsichtlich des Registrierflächenbedarfs und der Registrierorgane bisher üblicher Fahrtschreiber weiter verringern.

Im Gegensatz zu den von Grenzwertgebern gelieferten Betriebsdaten lassen sich verschiedene andere Betriebsdaten über geeignete Eingabemittel auch von Hand eingeben und in der gleichen Weise aufzeichnen. Auch eine Eingabe externer Daten, die z.B. von einer Wiege- oder Mengenmeßanlage geliefert werden, ist denkbar.

Das Nachlaufsystem, das bei derartigen Fahrtschreibern bisher lediglich dem Aufzeichnen einer einzigen Betriebsfunktion, nämlich dem Aufzeichnen der Motordrehzahlen gedient hat, ist somit in vielfacher Weise nutzbar.

**Patentansprüche**

1. Registrieranordnung für Fahrtschreiber zum Aufzeichnen von Markierungen für beim Betrieb eines Kraftfahrzeuges vorkommende und durch geeignete Grenzwertgeber erfaßbare Grenzwerte und/oder Grenzwertüberschreitungen in getrennten, den einzelnen Grenzwertgebern auf einem zeitabhängig angetriebenen Aufzeichnungsträger (9) zugeordneten Registrierspuren mit einer die Grenzwertgeber oder diesen zugeordneten Speichermitteln abtastenden Abfrageeinrichtung (13) und wenigstens einem Registrierorgan, dadurch gekennzeichnet, daß der Abfrageeinrichtung (13) ein Zeitgeber (19) zugeordnet ist, welcher beim Auffinden eines Signals des Grenzwertgebers den Abfragevorgang für eine wählbare Dauer unterbricht und daß Mittel vorgesehen sind, die wenigstens für die Daur des Abfragestillstandes eine oszillierende Bewegung des in der betreffenden Registrierspur befindlichen Registrierorgans bewirken.

2. Registrieranordnung nach Anspruch 1, dadurch gekennzeichnet, daß ein ein einzelnes Registrierorgan (7) betätigender Stellmotor (2) vorgesehen ist, welcher durch von einem Steuersignalgeber (11) gelieferte, die jeweiligen Grenzwertgeber bestimmten Registrierspuren auf dem Aufzeichnungsträger (9) zuordnende Signal steuerbar ist.

3. Registrieranordnung nach Anspruch 1, dadurch gekennzeichnet, daß für das Aufzeichnen der Grenzwerte und/oder Grenzwertüberschreitungen kennzeichnenden Markierungen ein in einem Fahrtschreiber für die Drehzahlregistrierung vorgesehenes an sich bekanntes Nachlaufregistriersystem (1) mitbenutzt wird, wobei mittels zeit- oder streckenabhängig wirksamer Schaltmittel die Drehzahlaufzeichnungen für die Dauer des Abfragens der Grenzwertgeber und gegebenenfalls des Aufzeichnens von Markierungen unterbrechbar sind.

**Claims**

1. Recording arrangement for tachographs for producing markings of limit values and/or exceedings of limit values produced in the operation of a motor vehicle and measured by suitable limit value generators, which limit values are recorded on separate recording tracks of a time dependently driven record carrier (9) the arrangement having an interrogation device (13) for sensing the limit value generators of storing means attributed thereto and at least one recording means, characterized in that to the interrogation device (13) there is attributed a time generator (19) which on discovering a signal of the limit value generator interrupts the interrogation process for a selected time period and that means are provided which at least for the time of the interruption of the interrogation produces an oscillating movement of the recording means in the corresponding recording track.

2. Recording arrangement according to Claim 1, characterized in that there is a servo motor (2) operating a single recording means (7) which motor is controlled by signals attributing the individual limit value generator to definite recording tracks on the record carrier (9) which signals are delivered by a control pulse generator (11).

3. Recording arrangement according to Claim 1, characterized in that for producing limit values and/or exceedings of limit values characterizing markings a follower system (1) known as such is used which is otherwise provided in the tachograph for recording motor revolutions wherein by means of time or distance dependent switches the recordings of the revolutions may be interrupted for the time of interrogating the limit value generators and if necessary also for the time of recording the markings.

**Revendications**

1. Dispositif d'enregistrement pour enregistreur de route destiné à l'enregistrement de marques pour des valeurs limites et/ou des dépassements de valeurs limites apparaissant lors de l'utilisation d'un véhicule automobile et pouvant être relevées par des capteurs de valeurs limites appropriés, dans des pistes d'enregistrement séparées, affectées aux divers capteurs de valeurs limites sur un support d'enregistrement (9) entraîné en fonction du temps, avec un dispositif d'interrogation (13) associé aux capteurs de valeurs limites ou aux moyens de mémorisation affectés à ces derniers et au moins un organe enregistreur, caractérisé par le fait qu'au dispositif d'interrogation (13) est affecté un générateur d'horloge (19) lequel, en détectant un signal du capteur de valeurs limites, coupe le processus d'interrogation pendant une durée sélectionnable et que des moyens sont prévus qui impriment, au moins pour la durée de l'immobilisation de l'interrogation, un mouvement oscillant à l'organe enregistreur placé dans la piste d'enregistrement concernée.

2. Dispositif d'enregistrement selon la revendication 1, caractérisé par le fait qu'un servomoteur (2) actionnant un organe enregistreur unique (7) est prévu lequel peut être commandé par des signaux fournis par un générateur de signaux de commande (11) et associant les capteurs de valeurs limites respectifs à des pistes d'enregistrement déterminées sur le support d'enregistrement (9).

3. Dispositif d'enregistrement selon la revendication 1, caractérisé par le fait que pour l'enregistrement des marques caractérisant des valeurs limites et/ou des dépassements de valeurs limites, on utilise simultanément un système d'enregistrement asservi (1) en soi connu prévu dans un enregistreur de route pour l'enregistrement des vitesses de rotation, alors que des moyens de commutation agissant en fonction du temps ou de la distance parcourue permettent d'interrompre les enregistrements de la vitesse de rotation pendant la durée de l'interrogation des capteurs de valeurs limites et, le cas échéant, de l'enregistrement de marques.